# EUROPEAN PATENT APPLICATION

(11) **EP 4 804 056 A1**
(43) Date of publication of application: **09.09.2026**
(21) Application number: 26161670.0
(22) Date of filing: 02.03.2026
(51) Int. Cl.: G06F 21/12, G06F 21/55, G06F 8/36, G06F 21/57

(54) **SYSTEM AND METHOD FOR CONTEXTUAL SECURITY ANALYSIS OF SOFTWARE ARTIFACTS**

(30) Priority: 03.03.2025 US 202519068247
(71) Applicant: Jfrog Ltd., 4250465 Netanya (IL)
(72) Inventor: MENASHE, Shachar, 4250465 Netanya (IL); KHIVRICH, Ilya, 4250465 Netanya (IL); ZATUTSCHNE-MAROM, Daniel, 4250465 Netanya (IL); ZARFATI, Tal, 4250465 Netanya (IL)
(74) Representative: Pearl Cohen UK

(57) **Abstract**

A system and method for contextual security analysis for software artifacts, including, for each of a plurality of software vulnerabilities, where each software vulnerability is associated with a vulnerable function included in a vulnerable library: identifying third party libraries using the vulnerable library; flagging third party libraries including a function reaching the vulnerable function as vulnerable - by associating the identified third party libraries with the software vulnerability; and flagging first party libraries matching a flagged third party library as vulnerable. According to some embodiments, flagged libraries may be described in dedicated database entries stored in cache memory, which may be used to enhance computational efficiency and robustness in performing security analysis on software artifacts (such as, e.g., large codebases pointing to external libraries, and the like).

## Description

### FIELD OF THE INVENTION

The present invention relates to detection of security threats and vulnerabilities in software artifacts.

### BACKGROUND OF THE INVENTION

Software vulnerabilities, such as code injection, buffer overflows, or hardcoded secrets, are known to result from various sources such as, e.g., coding errors or design flaws - that make parts of a computer program or codebase susceptible to unauthorized access or manipulation. Various technologies and techniques have been developed to identify exploitable paths in a program or code, assess the severity of vulnerabilities, and implement measures to mitigate security risks. However, existing technologies may prove either formidably computationally costly, or inaccurate and ineffective, when large codebases are considered. There is a need for robust and computationally economical tools for software security scanning and analysis for large codebases, allowing to identify vulnerabilities in large- or enterprise-scale software systems, applications, platforms, and the like.

### SUMMARY

A system and method for contextual security analysis for software artifacts according to some embodiments may include, for each of a plurality of software vulnerabilities, where each software vulnerability is associated with a vulnerable function included in a vulnerable library: identifying third party libraries using the vulnerable library; flagging third party libraries including a function reaching the vulnerable function as vulnerable - for example by associating the identified third party libraries with the software vulnerability; and identifying and flagging first party libraries matching a flagged third party library as vulnerable.

According to some embodiments, flagged libraries may be described in dedicated database entries stored in cache memory, which may be used to enhance computational efficiency and robustness in performing security analysis on software artifacts (such as, e.g., large codebases pointing to external libraries, and the like).

Some embodiments may include building a reachability graph for third party libraries to determine what functions in a third party library reach a vulnerable function or library.

### BRIEF DESCRIPTION OF THE DRAWINGS

Non-limiting examples of embodiments of the disclosure are described below with reference to figures attached hereto. Dimensions of features shown in the figures are chosen for convenience and clarity of presentation and are not necessarily shown to scale. The subject matter regarded as the invention is particularly pointed out and distinctly claimed in the concluding portion of the specification. The invention, however, both as to organization and method of operation, together with objects, features, and advantages thereof, can be understood by reference to the following detailed description when read with the accompanied drawings. Embodiments are illustrated without limitation in the figures, in which like reference numerals may indicate corresponding, analogous, or similar elements, and in which:
Fig. 1 is a high-level block diagram of an exemplary computing device which may be used with embodiments of the present invention;
Fig. 2 shows an example reachability scenario including first party code using third party dependencies according to some embodiments of the invention;
Fig. 3 shows an example reachability analysis algorithm according to some embodiments of the invention;
Fig. 4A shows example mappings of exported functions to vulnerable functions inside a vulnerable third party library according to some embodiments of the invention;
Fig. 4B shows example mappings of exported functions to imported functions inside a third party library according to some embodiments of the invention;
Fig. 5 shows an example process for contextual security analysis according to some embodiments of the invention; and
Figs. 6A-B shows nonlimiting example outputs of reachability analyses according to some embodiments of the invention.

It will be appreciated that for simplicity and clarity of illustration, elements shown in the figures have not necessarily been drawn accurately or to scale. For example, the dimensions of some of the elements can be exaggerated relative to other elements for clarity, or several physical components can be included in one functional block or element.

### DETAILED DESCRIPTION

In the following detailed description, numerous specific details are set forth in order to provide a thorough understanding of the invention. However, it will be understood by those skilled in the art that the present invention can be practiced without these specific details. In other instances, well-known methods, procedures, components, modules, units and/or circuits have not been described in detail so as not to obscure the invention.

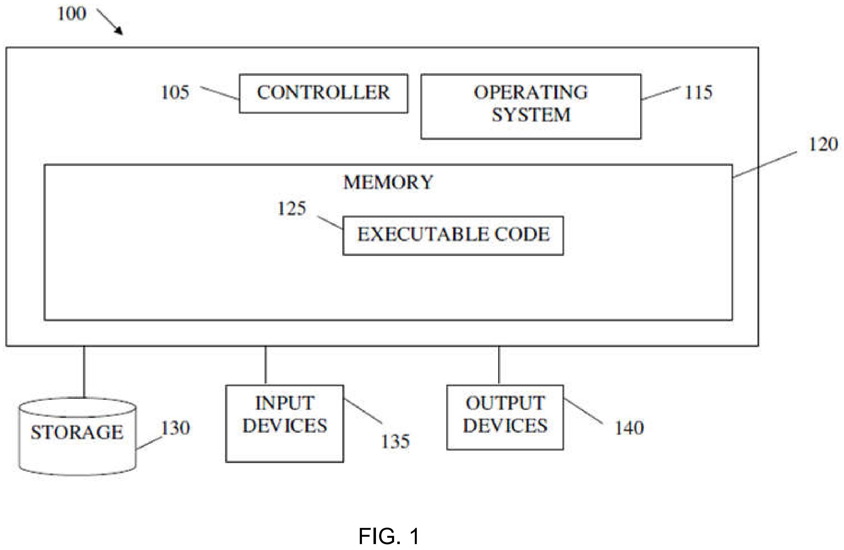

Fig. 1 shows a high-level block diagram of an exemplary computing device which may be used with embodiments of the present invention. Computing device 100 may include a controller or computer processor 105 that may be, for example, a central processing unit processor (CPU), a chip or any suitable computing device, an operating system 115, a memory 120, a storage 130, input devices 135 and output devices 140 such as a computer display or monitor displaying for example a computer desktop system.

Operating system 115 may be or may include code to perform tasks involving coordination, scheduling, arbitration, or managing operation of computing device 100, for example, scheduling execution of programs. Memory 120 may be or may include, for example, a Random Access Memory (RAM), a read only memory (ROM), a Flash memory, a volatile or non-volatile memory, or other suitable memory units or storage units. Memory 120 may be or may include a plurality of different memory units. Memory 120 may store for example, instructions (e.g. code 125) to carry out a method as disclosed herein, and/or output data, etc.

Executable code 125 may be any application, program, process, task, or script. Executable code 125 may be executed by controller 105 possibly under control of operating system 115. For example, executable code 125 may be or execute one or more applications performing methods as disclosed herein. In some embodiments, more than one computing device 100 or components of device 100 may be used. One or more processor(s) 105 may be configured to carry out embodiments of the present invention by for example executing software or code. Storage 130 may be or may include, for example, a hard disk drive, a floppy disk drive, a compact disk (CD) drive, a universal serial bus (USB) device or other suitable removable and/or fixed storage unit. Storage 130 may include cloud-based storage. Data described herein may be stored in a storage 130 and may be loaded from storage 130 into a memory 120 where it may be processed by controller 105.

Input devices 135 may be or may include a mouse, a keyboard, a touch screen or pad or any suitable input device or combination of devices. Output devices 140 may include one or more displays, speakers and/or any other suitable output devices or combination of output devices. Any applicable input/output (I/O) devices may be connected to computing device 100, for example, a wired or wireless network interface card (NIC), a modem, printer, a universal serial bus (USB) device or external hard drive may be included in input devices 135 and/or output devices 140.

Embodiments of the invention may include one or more article(s) (e.g. memory 120 or storage 130) such as a computer or processor non-transitory readable medium, or a computer or processor non-transitory storage medium, such as for example a memory, a disk drive, or a USB flash memory encoding, including, or storing instructions, e.g., computer-executable instructions, which, when executed by a processor or controller, carry out methods and procedures disclosed herein.

Some embodiments may allow performing fast source code, or code reachability analysis. Reachability analysis according to some embodiments may be used for many purposes, for example to determine whether a software vulnerability can be exploited in the context of a given codebase (such as for example a first party code base).

A software vulnerability (or threat) as used herein may refer to a weakness in a software system that may be exploited, e.g., by attackers, to compromise the system's confidentiality, integrity, or availability. These vulnerabilities may arise from various factors such as for example coding errors, design flaws, improper configuration, or inadequate security controls. Exploiting a software vulnerability may allow an attacker (e.g. hacker) to execute unauthorized actions, such as gaining access to sensitive data, modifying system functionality, or causing system crashes. Software vulnerabilities may originate in functions and libraries when they contain coding flaws or insecure implementations. Vulnerable functions, such as for example functions improperly handling user inputs (e.g., eval() or unchecked buffer operations), may introduce risks like code injection or buffer overflows. Similarly, vulnerabilities in third-party libraries (which may be referred to as "vulnerable" libraries), such as for example outdated dependencies or insecure cryptographic algorithms, can expose an entire application to attacks. Identifying and mitigating these risks may require analyzing both the codebase's custom functions and the external libraries it relies on to ensure security throughout the system.

A vulnerable function according to some embodiments of the invention may be, e.g., a callable piece of code from a library or within an application/program, that contains weaknesses making it susceptible to exploitation - such as, e.g., mishandling inputs, insecure logic, or reliance on unsafe practices. For instance, in the JavaScript programming language, eval() may be a vulnerable function when it processes untrusted input, as it allows arbitrary code execution. Vulnerable functions may or may not be invoked in a program; their existence alone may pose a security risk if reachable (e.g. callable) or exposed to user input. They can reside in any library-standard or third-party-and in any programming language, such as C, Python, or Java. A vulnerable function may differ from a "secure" or non-vulnerable function, for example by failing to enforce proper security controls (e.g., input validation, memory safety). Vulnerable functions may exist to serve legitimate purposes but may be misused due to poor implementation. According to some embodiments, any callable function from a library may potentially be vulnerable depending on its design and usage context, and on its potential to be exploited.

A vulnerable library according to some embodiments of the invention may be a collection of functions, modules, or application programming interfaces (APIs) that may collectively pose security risks due to flaws in its implementation, such as using outdated cryptographic methods or containing functions that lack proper safeguards. For example, a deprecated SSL/TLS library (used for secure network communications) with known exploits (such as for example old versions of OpenSSL) may endanger any program or application relying on it and expose them to security exploits. Vulnerable libraries in various computer languages, while possibly originally designed for functionality or convenience, may become insecure or vulnerable over time, or may be discovered to be vulnerable at a later time (e.g., after a point in time where the library was secure or not vulnerable) - for example due to new attack vectors or lack of updates of the library and/or relevant software components. Unlike secure libraries, vulnerable libraries may fail to address evolving security standards and can expose entire systems to compromise if integrated into a codebase. According to some embodiments, a vulnerable library may be for example a software module, component, or artifact that contains a vulnerable function which may be invoked and/or called (e.g. reachable) either directly or indirectly, for example as a part of a first party code or corresponding computer program or application. Additional or alternative definitions of vulnerable functions, libraries, and the like, may be used in different embodiments.

According to some embodiments, a software vulnerability which may be associated with a function/library (for example as part of labeling, identifying, determining, or defining a function/library as "vulnerable") may be identified or defined using automated tools, manual analysis, real-world exploit evidence, and the like, such as for example:
- Static analysis tools: scanning tools such as for example CodeQL, SonarQube, or Fortify may be used to scan the codebase to detect patterns associated with known vulnerabilities, such as improper input validation or insecure cryptographic use. These tools may flag code that matches predefined rules or heuristics.
- Dynamic testing and fuzzing: techniques such as, e.g., fuzz testing may send malformed or unexpected inputs to an application during runtime to discover behavior that may indicate vulnerabilities, such as, e.g., crashes or unexpected outputs.
- Manual auditing: security researchers and penetration testers may manually inspect code, configurations, and execution flows to identify weaknesses that may not be caught by automated tools, especially logic errors or complex scenarios.
- Exploit evidence: vulnerabilities may surface when attackers exploit them in their native environment. When a breach or exploit is discovered, analysts may reverse-engineer the attack to pinpoint the vulnerable code or piece of code.
- Code comparison with vulnerability databases: scanning tools may compare codebases with known vulnerability signatures or patterns in databases such as for example Common Weakness Enumeration (CWE) or Common Vulnerabilities and Exposures (CVE) to flag risky constructs.
Additional or alternative operations, protocols and procedures may be used to identify and/or to register vulnerabilities which may then, e.g., be used or analyzed as part of reachability analyses according to different embodiments of the invention.

Reachability analysis as used herein may refer to a process of determining relationships or interdependencies among a series of program states or code paths where, e.g., some states or paths may be known as, or may be associated with, a software vulnerability (which may be, e.g., potentially exploited by an attacker). This may involve analyzing the control flow, data flow, and system interactions (e.g., between first party code and third party code, libraries, and the like) to trace whether malicious inputs or actions may trigger, invoke, use, or lead to the state or path associated with the vulnerability (this state or path, or part of a code, may be referred to as, e.g., vulnerable code, vulnerable library, vulnerable function, and the like - depending on the specific software artifact being associated with a vulnerability). By identifying or determining software artifacts or components that are vulnerable - or as leading to or triggering a software vulnerability - it may be possible to assess the exploitability of vulnerabilities and prioritize them for remediation. Reachability analysis according to some embodiments may be used in, for example, automated vulnerability scanners and static analysis tools to detect potential weaknesses in software systems or artifacts.

A software artifact as used herein may refer to outputs or deliverables produced during a software development process, which may include, for example, code (such as, e.g., source code), compiled binaries, libraries, configuration files, documentation, test scripts, and design diagrams.

A codebase as used herein may refer to the entire set of code for a software application or system, encompassing, e.g., both first party code-which may refer to the code written and maintained directly by the program's or application's developers-and third party code, which may refer to, for example, external libraries, frameworks, and dependencies integrated into the project. The codebase may be written in a given programming language of a plurality of different languages (e.g., Python, C++, and the like) and may serve as the foundation for the program or application, enabling development, testing, and deployment. According to some embodiments, a codebase may be stored in a version control system, such as for example Git, to manage collaboration, track changes, and ensure consistency across development teams.

Some nonlimiting example software components/artifacts/code snippets and software vulnerabilities or threats are provided in Tables 1A-B.

**Table 1A**

| Code Snippet | Code Type | Label | Vulnerability |
|---|---|---|---|
| function findMax() { return Max{arr[0], arr[1],..}; } | 1st Party Code | Safe | None |
| const express = require('express'); const app = express(); | 3rd Party Code | Safe | None Code Injection |
| app.get('/user', (req, res) => { res.send(eval(req.query.data)); }); | 1st Party Code | Vulnerable | (CVE-2021-44228) |
| const jwt = require('jsonwebtoken'); | 3rd Party Code | Safe | None |
| app.post('/login', (req, res) => { jwt.sign({ user: req.body.user }, 'secret'); }); | 1st Party Code | Vulnerable | Hardcoded Secret (CVE-2020-29583) |
| app.listen(3000, () => console.1og('Server running on port 3000')); | 1st Party Code | Safe | None |

**Table 1B**

| | | |
|---|---|---|
| 1^{st} Party Code | Software Composition/Component | Label/Description |
| data = yaml.load(source_text) | Uses pyyaml 6.02 | Not vulnerable (no vulnerability in the library version) |
| data = yaml.load(source_text) | Uses pyyaml 5.1 | Vulnerable to CVE-2020-1747 |
| data = yaml.safe_load(source_text) | Uses pyyaml 5.1 | Not vulnerable (vulnerability in the library not applicable) |
| import org.apache.logging.log4j.LogManager; | Uses log4j2 2.14 | Vulnerable to CVE-2021-44228 directly |
| import org.apache.logging.log4j.Logger; | | |
| Logger logger = LogManager.getRootLogger(); | | |
| logger.info(data); | | |
| import org.slf4j.Logger; | Uses slf4j, which uses log4j2 2.14 | Vulnerable to CVE-2021-44228 transitively through slf4j |
| import org.slf4j.LoggerFactory; | | |
| private Logger log = LoggerFactory.getLogger(); log.info(data); | | |
| import org.fakelibrary.Class; | Uses org.fakelibrary, which uses log4j2 2.14 as follows: | Not vulnerable in the sense of data flow reachability |
| Class.run(); | | |
| | import org.slf4j.Logger; | |
| | import org.slf4j.LoggerFactory; | |
| | class Class() { | |
| | void run() { | |
| | private Logger log = LoggerFactory.getLogger(); | |
| | log.info("Constant"); | |
| | } | |
| | } | |

Some nonlimiting example vulnerabilities may be designated or referred to using their common vulnerabilities and exposures identifier (CVE ID, e.g., in the format of CVE-yyyy-XXXXX), or using alternative identification or nomenclature methods. Additional or alternative software components and/or vulnerabilities may be considered in different embodiments of the invention.

Reachability analysis according to some embodiments of the invention may require supplying the entire relevant codebase (both first party code and third party code) to an analysis engine. The analysis engine may, for example, build from scratch an abstract syntax tree (AST) which may be done for example using a code parser (CP), and then a call/control flow graph (CFG) and data flow graph (DFG). The engine may then traverse the graphs as part of the reachability analysis. Nonlimiting example formats or representations of an AST, CFG, and DFG according to some embodiments of the invention are provided in Table 2:

**Table 2**

| | Description | Example Representation |
|---|---|---|
| Abstract Syntax Tree (AST) | Parses code into a tree structure, representing the syntax and hierarchy of code. | <Function><Name>findMax</Name><Body>return arr[0];</Body></Function> |
| Control Flow Graph (CFG) | Models the execution flow between program blocks, such as function calls and conditional branches. | Node1: Start → Node2: if (arr[0] > arr[1]) → Node3: |
| | | Return arr[0] → Node4: End |
| Data Flow Graph (DFG) | Represents how data moves through the program, showing dependencies between variables or expressions. | Node1: arr[0] → Node2: arr[1] → Node3: if (arr[0] > arr[1]) → Node4: return arr[0] |

Additional or alternative formats or representations may be used in different embodiments.

Some embodiments may provide a set of data structures and advanced algorithms, allowing to capture needed features or factors from code modules, such that these features may be stored in cache memory and may be later used or reused when performing reachability analyses. According to some embodiments, a reachability analysis may analyze a first party code on demand (e.g., upon receiving a computerized command or request to analyze the relevant program), and may re-use the features that were previously computed, for example without requiring on-demand analysis of the relevant non-first party code modules (such an analysis may entail significant or formidable computational cost). Some embodiments of the invention may provide a computationally economical algorithm that allows to determine whether a supplied source code or first party code contains an execution path that reaches/calls a well-known vulnerable function X.

According to some embodiments of the invention, performing a reachability analysis of a codebase may involve, for example, the following challenges:
- The analysis may have to be performed on-demand on the entire codebase (e.g., first and third party code), which may involve building the entire AST, CFG and DFG for the codebase, e.g., as a single, or monolithic piece. This process may have huge computational and memory implications, for example, in cases that the entire codebase is extremely large.
- The analysis may require supplying both the first party and third party code to the analysis engine. In nonlimiting example cases where analysis is performed on-demand, the analysis engine may require access to all of the relevant code (first party and third party). In some cases, however, some of the codebase may not be available and may not be readily provided to the analysis engine: for instance, a given client's computer system may only have access to the first code (which may include code developed and/or maintained in that system) and may not have access to the third party code - which may be the case for a codebase where the third party code is only specified as a dependency list, and the actual code is not present in the first party code.

Some embodiments may improve software security technologies, such as for example security solutions using a "naive" approach not differentiating between analysis of first and third party code (and thus not taking "contextual" information into consideration, namely the context or information regarding whether a software artifact is a first party artifact or third party artifact). Using a contextual approach, including pre-computation operations of security features and reusing pre-calculated features, e.g., in on-demand scans, some embodiments may improve software security technology and perform an on-demand scans that may be, for example:
- Faster compared to existing methods for scanning software artifacts (relying, e.g., on performing analyses on the entire codebase, including first and third party libraries).
- Less computationally demanding or expensive, and less CPU and memory intensive compared to existing methods (and particularly cheaper using cloud computing environments).
In contrast to existing approaches, security analyses according to some embodiments of the invention may not require supplying the source code of any code module which underwent "feature extraction", or which was pre-analyzed or considered during the pre-computation stage. In the pre-computation stage, some embodiments may create a cache or cache database of, e.g., some or all the third party code from public repositories, which may be subsequently indexed. In an on-demand scan, when first party code is found to reference any third party code, the needed information may be fetched from cache memory instead of requiring performing a security analysis on the third party code itself in the on-demand computation. In some embodiments, cache or cache database entries may be keyed or labeled using a string (e.g. in the form of "library name + version" for the relevant cached entries describing that library/version), and cache entries may be hardware implemented using content-addressable memory (CAM) units, which may eliminate latency incurred by, e.g., hashing input keys before searching a hash map, and the like - and may accordingly accelerate memory lookup and/or alternative memory related operations. Some example hardware implementations of cache components that may be used in some embodiments may include, e.g., the Xilinx Virtex-7 FPGA and Intel Arria 10 FPGA, ternary CAM (TCAM) units designed for high-performance pattern matching tasks, and/or fully associative memory components as implemented in specialized processors for high-speed cache lookup operations, such as for example the Cisco QuantumFlow Processor. Additional or alternative cache database formats and corresponding hardware accelerations may be used in different embodiments.

According to some embodiments, constructing a reachability graph may include, for example, the following definitions/criteria/interpretations, and operations/procedures described in Table 3:
1) Interpretation 1: reachability may be defined according to various reachability criteria, such as, e.g., existence of a call or a call path to a vulnerable function/library/etc. (exported calls f1, f1 and/or calls f2, f2 to a vulnerable function).
1a) analysis of the source code of the package:
In order to resolve functions in the source code, and to determine which functions are called from each function in the code (especially for object oriented programming languages), it may be required to parse the source code (for example by constructing an abstract syntax tree) and deploy, e.g., type propagation and constant propagation algorithms (such as for example the Hindley-Milner Type Inference algorithm, and the Worklist Algorithm, respectively) to resolve or determine potential call targets for each function call in the analyzed code. Depending on the required precision and execution speed, type propagation and constant propagation algorithms may require constructing an intermediate representation of the analyzed code, such as for example a code flow graph or code flow graph variants (such as, e.g., program dependency graph, and the like).
1b) analysis of the compiled form of the package:
   For programming languages compiled to native code (such as for example C/C++, Go, Rust, and the like) or byte code (such as, e.g., Java, Scala and other JVM-based languages), it may be required to construct a reachability graph based on a compiled form of the code. This may be done, for example, by segmenting the code to functions (e.g., using metadata contained in the file, such as for example an executable and linkable format (ELF) header), and disassembling each function to resolve call opcodes and their targets, based on, e.g., metadata such as ELF headers or class constant tables.
2) Interpretation 2: reachability may be defined as an existence of data flow between arguments of exported and the arguments of a vulnerable function/library, such as for example:

**Table 3**

| |
|---|
| class C: |
| def set_data(self, data): |
| self.data = data |
| def send(self): |
| vulnerable(self.data) |
| C_instance = C() |
| def exported(data): |
| C_instance.set _data(data) |
| def async_op(): |
| C_instance.send() |
| In this case, although no call chain exists between, e.g., exported and vulnerable functions, the data passed to exported functions still controls the call argument of a vulnerable function ("vulnerable(self.data")). In order to locate such paths, a more advanced analysis may be required, e.g., starting from analysis form similar to that described in 1a) and continuing to trace data flow paths (using, e.g., algorithms for constructing a data flow graph, such as for example the Def-Use Chain Construction or Iterative Data Flow Analysis algorithms, Kildall's algorithm, and the like). |

Additional or alternative operations or procedures may be used as part of performing a reachability analysis according to different embodiments of the invention.

A nonlimiting example reachability graph that may be constructed and/or used by some embodiments of the invention is provided herein with regard to a nonlimiting case or scenario in Table 4:

**Table 4**

| Scenario: Path Traversal Vulnerability | | | | |
|---|---|---|---|---|
| A web application may allow users to download files by specifying a filename in the URL. | | | | |
| However, insufficient input validation may allow attackers to manipulate file paths and access unauthorized files. | | | | |

| Code snippet: | | | | |
|---|---|---|---|---|
| | import os | | | |
| | def main(request): | | | |
| | | filename = request.get("filename") | | |
| | | process_request(filename) | | |
| | def process_request(filename): | | | |
| | | validate_input(filename) | | |
| | | | serve_file(filename) | |
| | | def validate_input(filename): | | |
| | | | # Only checks if filename is not empty | |
| | | | if not filename: | |
| | | | | raise ValueError("Filename cannot be empty!") |
| | | def serve_file(filename): | | |
| | | | # Vulnerable: Does not sanitize the file path | |
| | | | base_dir = "/var/www/files/" | |
| | | | file_path = os.path.join(base_dir, filename) | |
| | | | with open(file_path, "r") as file: | |
| | | | | return file.read() |
| A reachability graph modeling the flow of execution and highlighting how an attacker can reach the vulnerable function may be, e.g.: | | | | |
| | | [main] ↓ [process_request] ← Entry point for untrusted input ↓ [validate_input] ← Insufficient validation, bypass possible ↓ [serve_file] ← Vulnerable to path traversal (no sanitization) ↓ (Access Unauthorized Files) | | |
| The reachability graph may indicate that, e.g.: | | | | |
| | o Entry point: Input (filename) may originate from an HTTP request, making it attacker-controlled. | | | |
| | o Validation: | | | |
| The validate_input function may perform a minimal check but may not sanitize directory traversal characters (e.g., ../). | | | | |
| ∘ Exploitation Path: | | | | |
| An attacker can craft a request like: | | | | |
| | GET /download?filename=../../../../etc/passwd | | | |
| | This request reaches the serve_file function, which may construct an unsafe path: | | | |
| | /var/www/files/../../../../etc/passwd and the file /etc/passwd may be read and returned. | | | |

Additional or alternative example scenarios may be considered using different embodiments.

Some embodiments may require providing both the first party and third party code to the reachability analysis engine (e.g., requiring no differentiation or distinction between the first party and third party code). If third party code is not provided, then the reachability analysis engine may only be able to identify direct calls (e.g., a function or method invocation where the caller explicitly specifies the callee by name, such as for example functionA() calling functionB() directly without indirection or intermediaries) from the first party code to a vulnerable third party function.

Some embodiments may identify third party dependencies of the first party code, and may access relevant open source platforms (e.g., if one is available) in order to download the relevant code associated with the dependency. After all relevant source code is downloaded, the analysis may continue and consider the entire codebase. Some embodiments, however, may not require third party code to be provided to the reachability analysis engine. Some embodiments may identify the third party dependencies of the first party code, and may pre-load the reachability analysis engine with the needed code paths and/or security attributes or features of the third party dependencies (then there may be no need to supply, download or analyze any third party code).

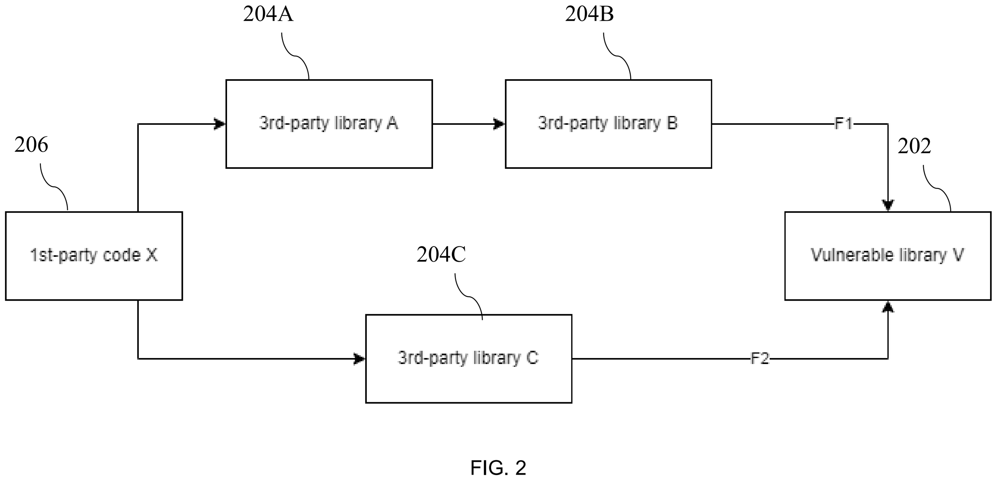

Fig. 2 shows an example reachability scenario including first party code using third party dependencies according to some embodiments of the invention.

Reachability analyses according to some embodiments of the invention may relate to, for example, the following nonlimiting definitions:
- An export may refer to a function or functionality of a library which may be invoked by code outside the library. A nonlimiting example export may be, e.g.:

   ```
            // File: mathUtils.js
            export function add(a, b) {
              return a + b;
            }
            export const PI = 3.14;
```

   where the mathUtils.js (JavaScript) file/library exports an add function and PI constant so they may be reused in other files.
- An import may refer to an inter-library function call. The called functionality may be an export. A nonlimiting example import may be, e.g.:

   ```
            // File: main.js
            import { add, PI } from './mathUtils.js';
            console.log(add(2, 3)); // Output: 5
            console.log(PI); // Output: 3.14
```

   where the main.js file imports the add function and PI constant (exported from mathUtils.js) to access or use their functionality.
- Vulnerable library 202 may be or may refer to, for example, a software library vulnerable to a software vulnerability or security threat.
- Third party code and/or libraries 204A-C, which may or may include be code (source or binary) and/or software artifacts which may be, e.g., publicly known or available and may be used, for example, by an organization/developer who did not develop them directly, e.g., as part of a first party code.
- First party code 206, which may be, e.g., a code of an application or computer program (developed, for example, by an organization/developer directly, as opposed to third party code).
- A library may be referred to as a dependent library P' of P if, e.g., code in library P' depends on (calls or imports) exported code from library P.

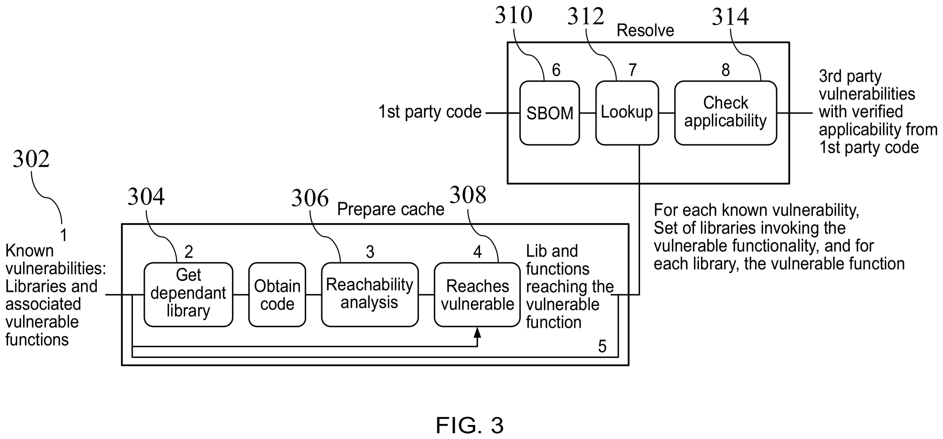

Fig. 3 shows an example reachability analysis algorithm according to some embodiments of the invention.

Some embodiments may include, for each of a plurality of software vulnerabilities (where each software vulnerability may be associated with a vulnerable function included in a vulnerable library), identifying one or more third party libraries using the vulnerable library, and flagging one or more of the identified third party libraries as vulnerable - each flagged library including a function reaching the vulnerable function. Some embodiments may include flagging one or more first party libraries as vulnerable, the flagged one or more first party libraries matching one or more of the flagged third party libraries. Some embodiments may include, for libraries identified to be using a vulnerable library: building a reachability graph, the reachability graph including functions of the identified library; and extracting functions from the reachability graph reaching the vulnerable function (the flagging of libraries as vulnerable may then be performed based on the extracting of functions from the reachability graph; some embodiments may include filtering out or removing one or more of the extracted functions, such as, e.g., functions called only from outside of the identified library). Some embodiments may include iteratively repeating, for third party libraries flagged as vulnerable, the identifying or determining of libraries using the vulnerable library (or library flagged as vulnerable) and the flagging or labelling of identified libraries as vulnerable.

An example reachability analysis according to some embodiments may determine whether a functionality from a third party library L (such as for example a vulnerable library or a library associated with a security threat) which may be associated with, or may be known to have a known security issue or software vulnerability or security threat associated with a specific function f (e.g., a vulnerable function) invoked, directly or indirectly, by first party code - which may lead to a possibility of exploiting the vulnerability. Nonlimiting example reachability analysis algorithms according to some embodiments of the invention may include some or all of the operations provided in Table 5:

**Table 5**

| "Prepare cache" operations (pre-compute, may be run or executed at any time) | |
|---|---|
| | 1) Start from a set of known software vulnerabilities or threats (operation 302) in third party libraries. Each vulnerability v in third party library L0 may be associated with a function f0 included in the library according to a plurality of reachability criteria (see nonlimiting examples below). |
| | (In this context, L0 including f0 associated with v may be referred to as a "vulnerable library", and f0 may be referred to as a "vulnerable function".) |
| | 2) For each (v, L0, f0): identify, determine or obtain a list of all third party libraries or dependent libraries L1 (operation 304) using or including calls to the vulnerable library, or importing functionalities of the vulnerable library. |
| | 3) For each library L1, build a reachability graph including the functions of the library (operation 306). |
| | 4) Extract or obtain from the reachability graph one or more functions which reach or are connected to f0 (some embodiments may filter out or discard exported functions which may be called from outside the library), forming a set F1 including the exported functions (operation 308). Some embodiments may flag/label each of the functions in F1, and/or each of the libraries in L1 which includes a function f1 in the set F1, as vulnerable - and may for example associate or link the functions in F1 and/or the libraries in L1 with vulnerability v in appropriate database entries in cache memory. |
| | 5) Iteratively repeat the process from step 2 for each (v, L1, f1) (where f1 is a function in the set F1), and/or for each function and/or library flagged as vulnerable in preceding operations, and collect results from all iterations; collected results may be stored in a dedicated database in cache memory. |

| "Resolve" operations (may be run or executed "live", e.g., when a software artifact may be provided as input for analysis) | |
|---|---|
| | 6) Obtain software artifact such as for example a first party code (may be provided as input) and calculate its Software Bill of Materials (SBOM) using, e.g., parsing package manager files, searching for and identifying known files, and the like. Some embodiments may then perform a reachability analysis on the artifact or first party code (operation 310). |
| | 7) For each function fx or library Lx found in the SBOM (and, e.g., referred to or called in the first party code), search or look for (operation 312).known third party libraries and/or functions matching Lx/fx, e.g., in vulnerability-library-function tuples of the form (vx, Lx, fx) in the cache created in step5 |
| | 8) For each tuple found (e.g., each record of a flagged/labeled library in a cache database such as, e.g., created in step 5 matching the library Lx found in the SBOM of the first party code), if fx/Lx is reachable in the context of first party code (e.g., in the case the first party code includes calls to, or imports from fx/Lx), the vulnerability or threat vx may be considered applicable in the context of the artifact or full codebase, and may for example be associated with or linked to the artifact (operation 314). The relevant libraries/functions fx/Lx in the first party code may be flagged or labeled as vulnerable, e.g., similarly to matching database entries in cache memory. Otherwise, if fx/Lx is not reachable in the context of first party code, then the vulnerability or threat vx may be considered inapplicable or irrelevant the artifact or full codebase, and some embodiments may not take any action, or do nothing with regard to inapplicable vulnerabilities or threats. |

Additional or alternative operations and/or steps may be included in reachability analyses according to different embodiments.

According to some embodiments, a function reaching a vulnerable function may include one or more of: a function passing data or data items into the vulnerable function, a function including a call chain which includes the vulnerable function, and a function included in a software module which includes the vulnerable function.

According to some embodiments, "L is reachable from E" (where L may be, e.g., a vulnerable function or library and E may be a separate first or third party function/library); "E is connected to L" or vice versa; and "reachability" as used herein may correspond or refer to one or more reachability or connectivity definitions/criteria, including, e.g., one or more of the example reachability criteria in Table 6:

**Table 6**

| |
|---|
| • Data flow reachability: one of the arguments passed from external code when invoking the functionality E may influence data passed to L, or may include passing or providing data or data items to from E to L. |
| • Code flow reachability: there exists a call chain starting from E and including L (for example, invoking E may lead to invoking L, even if reaching L may be contingent and may depend on, e.g., specific inputs to E) |
| • Heuristic or approximate reachability: a call to L exists in the same class, module, or software program as the export E (for example even if a call chain reaching L will not necessarily be invoked by E), so that invocations of L and E may be said to be heuristically correlated. |

Different choices of reachability or connectivity definitions/criteria may be used in different embodiments of the invention.

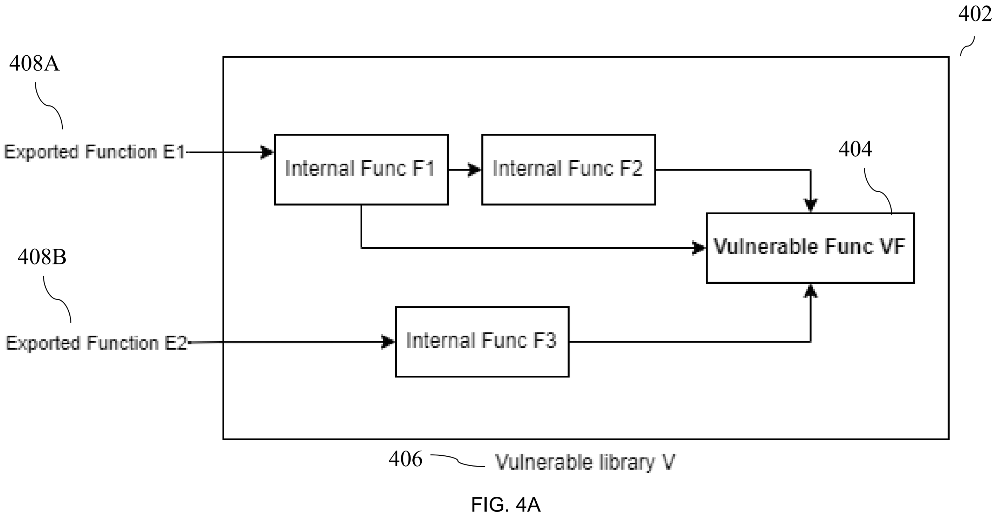

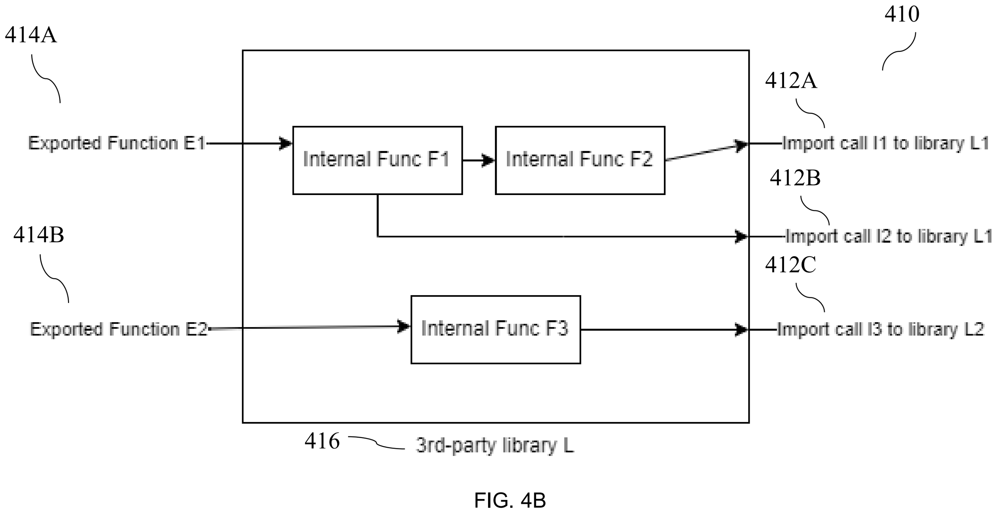

Fig. 4A shows example mappings of exported functions to vulnerable functions inside a vulnerable third party library according to some embodiments of the invention, and Fig. 4B shows example mappings of exported functions to imported functions inside a third party library according to some embodiments of the invention.

In a reachability analysis according to some embodiments, some operations (such as, e.g., operation 4 in Table 5) may require heavy computation, since the library's code may have to be statically analyzed, e.g., in order to determine various mappings between a specific code position or imported function calls and exported functions of a plurality of libraries, such as for example illustrated in example scenario 402 (mapping a vulnerable function VF 404 in a vulnerable library or a library associated with a software vulnerability 406 to library exports 408A-B) and scenario 410 (mapping third-party library imports 412A-C (which may for example include imports from, or calls to vulnerable library 406) to exported functions 414A-B used in a third party library 416). Some embodiments may perform the heavy computation associated with mapping operations such as, e.g., described in scenarios 402, 410 as a pre-compute step and save the results in cache memory. Results stored in cache may then be used on the fly when performing reachability analyses for a given software artifact, such that, e.g., some of the mappings between third party libraries and vulnerable libraries/functions may not have to be computed from scratch.

According to some embodiments, the flagging of libraries (such as, e.g., third party libraries identified or determined as part of the example algorithm described in Table 5) as vulnerable may include linking or associating one or more of the libraries with the software vulnerability or threat in a dedicated database, which may be stored, e.g., in cache memory. An example cache database according to some embodiments may include database entries associating libraries and/or functions (such as, e.g., third party libraries and functions flagged or labeled as vulnerable, or functions reaching/connected to a vulnerable function) with the software vulnerability or security threat or issue.

According to some embodiments, cache database entries may be created, e.g., as part of flagging or labeling software artifacts, and may conform to the example format described in Table 7:

**Table 7**

| |
|---|
| {code_position: FQN -> [ |
| { |
| "export": FQN, |
| "data_path": List[FQN] |
| } |
| ]} |
| where FQN may be a Fully Qualified Name in the format - |
| <LIBRARY>.<FILE>.<LINE>.<OPTIONAL_CONTEXT> |
| (such as for example "LIBC.FILEA.53"). |

According to some embodiments, <OPTIONAL_CONTEXT> in Table 7 may optionally include more information about a function/call, for example an argument number for the specific line, such as, e.g., in cases where a reachability analysis includes a data-flow analysis and not just a call-flow analysis (in such example case, the reachability engine may check if data is passed between function calls, not just that the function calls occurs). In some embodiments, cache database parameters, or parameters describing or characterizing each database entry may be, for example, "code_position" and "export" which may describe FQNs, and "data_path" which may be a list of all function calls encountered in the path between "code_position" and "export". Each function call may be expressed as a separate FQN. Additional or alternative database forms and labeling/flagging formats may be used in different embodiments of the invention.

According to some embodiments, following the populating of cache memory/database with data or information describing library P, a reachability analysis for a software artifact including dependencies on library P may skip heavy "Prepare Cache" operations, and may only perform "Resolve" operations (see, e.g., nonlimiting example algorithm in Table 5). Using data stored in cache memory may considerably speed up the algorithm and may not require the source code or library P to be present when performing the reachability computation.

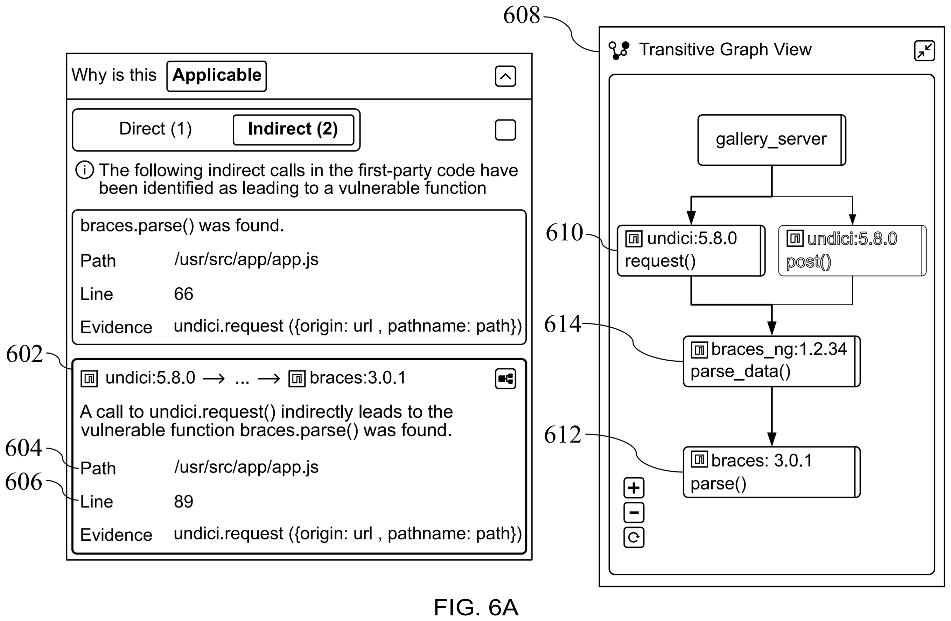

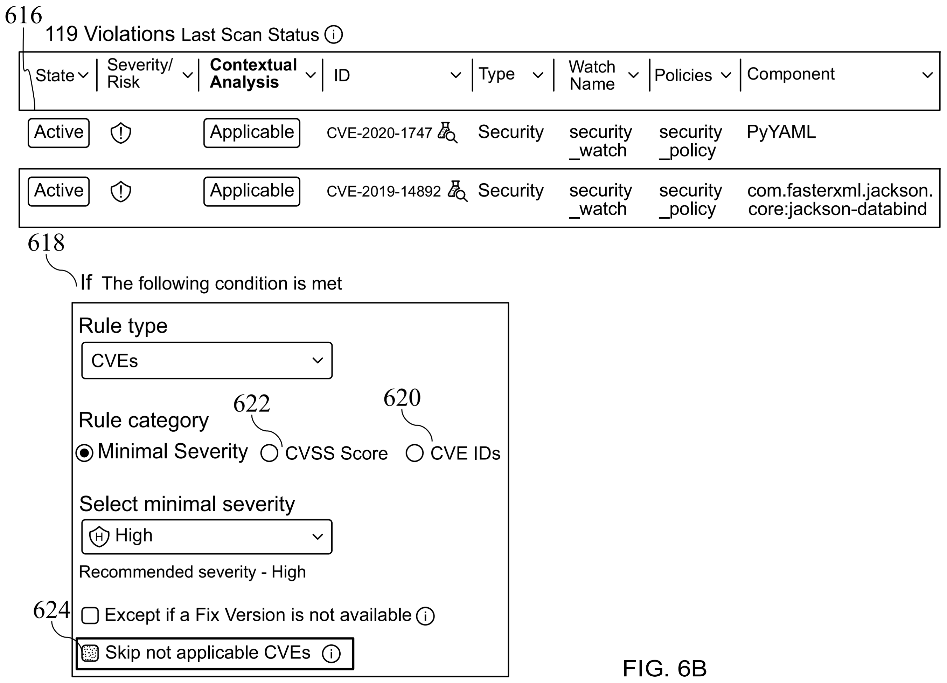

Figs. 6A-B shows nonlimiting example outputs of reachability analyses according to some embodiments of the invention.

Some embodiments may include displaying an alert on a graphical user interface (GUI) of a computer system, the alert describing functions/libraries flagged as vulnerable (such as, e.g., the first party libraries/functions flagged as part of the example algorithm in Table 5). For example, some embodiments may display an indication that a path exists from a first party code to a vulnerable function, and display function calls in a first party code that reach a vulnerable function 602, as well as the path 604 and/or line of code 606 of relevant calls. Some embodiments may display a call graph 608 showing the reachability or call connectivity from first party code or function 610 to vulnerable third party function 612 known or flagged as vulnerable (passing, for example, through third party libraries 614 known or flagged as vulnerable).

A contextual analysis according to some embodiments of the invention may be used to generate alerts or informational violations 616 when a vulnerable path is discovered. In some embodiments, conditional policies or rules 618 may be defined on the result of an analysis or scan (such as for example a reachability analysis algorithm as described herein or a static analysis or scan performed using third party library information or data stored in a cache database), where the defined policies may take into consideration whether or not an applicable path, or a call chain from the first party code to a relevant vulnerable function, was found. For example, a conditional rule or policy may be defined based on common vulnerabilities and exposures identifiers (CVE IDs) 620 and/or based on common vulnerability scoring system (CVSS) scores 622 for different software vulnerabilities and/or by applying a minimal severity level (which may be expressed, e.g., as a threshold value of a CVSS score) above which software vulnerabilities may be considered in the policy or rule: for example, if a vulnerability V1 has a CVSS score of 8, being above a threshold T=6, then identifying calls from a first party code to a vulnerable function associated with V1 may trigger an alert or violation - and if a vulnerability V2 has a CVSS score of 5<T=6, then identifying calls from a first party code to a vulnerable function associated with V2 may not trigger an alert or violation (e.g. it may be skipped, disregarded, and/or filtered out). In some embodiments, conditional policies or rules may be applied based on a predetermined setting or by a user clicking on a button to skip not applicable CVEs 624, or to skip vulnerabilities and exposures to which the rules or policy does not apply (such as for example to skip vulnerabilities having CVSS scores below a threshold T). Skipping vulnerability indications that do not have any applicable path or to which policies or rules (or conditions/criteria used in such policies or rules) do not apply may massively reduce the number of violations generated and/or policy actions wrongly applied, or applied to vulnerabilities that are not of actual interest (e.g., false positives). In addition to informational violations or alerts, actions performed by some embodiments based on scanning/analysis result may include, e.g., creating a ticket in a project tracking software, to fix the vulnerability or make it inapplicable or irrelevant; failing, tagging and/or preventing access and/or execution to an application version (e.g., a build version) that contains the applicable path or detected vulnerability; blocking, preventing downloads of, and/or deleting data items, software versions, or compiled software artifacts that include the applicable path or detected vulnerabilities, and the like.

Additional or alternative rules and policies, as well as outputs of a scan or analysis may be used in different embodiments.

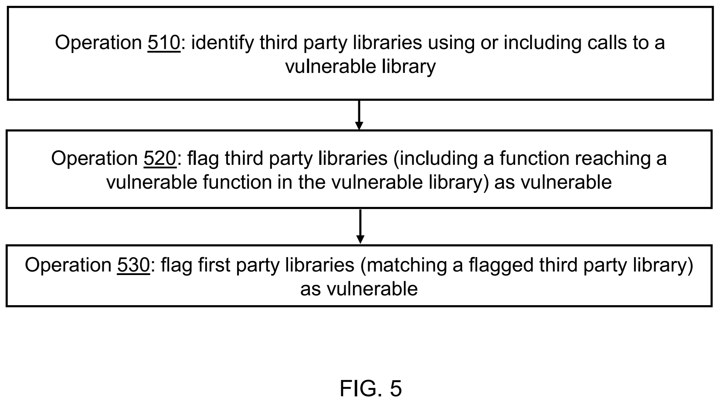

Fig. 5 shows an example process for contextual security analysis according to some embodiments of the invention. For each of a plurality of software vulnerabilities, where each software vulnerability is associated with a vulnerable function included in a vulnerable library (such as for example a triplet of the type (v, L, F) as described in Table 5), some embodiments may identify third party libraries using the vulnerable library or including calls to the vulnerable library (operation 510); flag or label third party libraries including a function reaching the vulnerable function (which may be indicated, e.g., by a reachability graph built or constructed for the relevant libraries) as vulnerable - for example by associating the identified third party libraries with the software vulnerability in a dedicated database stored in cache memory (operation 520); and flag or label first party libraries matching a flagged/labelled third party library (such as, e.g., described in the relevant database entry) as vulnerable (operation 530). Additional or alternative operations may be included in different security analyses and processes according to different embodiments.

One skilled in the art will realize the invention may be embodied in other specific forms without departing from the spirit or essential characteristics thereof. The embodiments described herein are therefore to be considered in all respects illustrative rather than limiting. In detailed description, numerous specific details are set forth in order to provide an understanding of the invention. However, it will be understood by those skilled in the art that the invention can be practiced without these specific details. In other instances, well-known methods, procedures, and components, modules, units and/or circuits have not been described in detail so as not to obscure the invention.

Embodiments may include different combinations of features noted in the described embodiments, and features or elements described with respect to one embodiment or flowchart can be combined with or used with features or elements described with respect to other embodiments.

Although embodiments of the invention are not limited in this regard, discussions utilizing terms such as, for example, "processing," "computing," "calculating," "determining," "establishing", "analyzing", "checking", or the like, can refer to operation(s) and/or process(es) of a computer, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that can store instructions to perform operations and/or processes.

The term set when used herein can include one or more items. Unless explicitly stated, the method embodiments described herein are not constrained to a particular order or sequence. Additionally, some of the described method embodiments or elements thereof can occur or be performed simultaneously, at the same point in time, or concurrently.

The description also includes the subject matter of the following clauses:
Clause 1: A computerized method of contextual security analysis for software artifacts, the method comprising, using a computer processor:
   for each of a plurality of software vulnerabilities, each software vulnerability associated with a vulnerable function, the vulnerable function included in a vulnerable library:
      identifying one or more third party libraries using the vulnerable library;
      flagging one or more of the identified third party libraries as vulnerable, each flagged library including a function reaching the vulnerable function, wherein the flagging of one or more of the identified third party libraries as vulnerable comprises associating one or more of the identified third party libraries with the software vulnerability; and
   flagging one or more first party libraries as vulnerable, the flagged one or more first party libraries matching one or more of the flagged third party libraries.
Clause 2: The computerized method of clause 1, comprising, for each of the identified one or more third party libraries:
   building a reachability graph, the reachability graph including one or more functions of the identified third party library; and
   extracting one or more of the functions from the reachability graph, wherein each of the extracted functions reach the vulnerable function;
   wherein the flagging of the one or more of the identified third party libraries is performed based on the extracting of the one or more of the functions from the reachability graph.
Clause 3: The computerized method of clause 1, wherein the flagging of one or more of the identified third party libraries as vulnerable comprises storing a database entry in cache memory, the database entry associating the one or more flagged third party libraries and the one or more functions reaching the vulnerable function with the software vulnerability.
Clause 4: The computerized method of clause 2, comprising filtering out one or more of the extracted functions, the filtered out functions called from outside of the identified library.
Clause 5: The computerized method of clause 1, comprising iteratively repeating, for one or more of the third party libraries flagged as vulnerable, the identifying of one or more third party libraries using the vulnerable library and the flagging of one or more of the identified third party libraries as vulnerable.
Clause 6: The computerized method of clause 1, wherein the function reaching the vulnerable function comprises one or more of: a function passing one or more data items into the vulnerable function, a function including a call chain wherein the call chain includes the vulnerable function, and a function included in a software module wherein the software module includes the vulnerable function.
Clause 7: The computerized method of clause 1, comprising displaying an alert on a graphical user interface (GUI) of a computer system, the alert describing the flagged one or more first party libraries.
Clause 8: A computerized system for contextual security analysis of software artifacts, the system comprising:
   a memory: and
   one or more processors configured to:
      for each of a plurality of software vulnerabilities, each software vulnerability associated with a vulnerable function, the vulnerable function included in a vulnerable library:
         identify one or more third party libraries using the vulnerable library;
         flag one or more of the identified third party libraries as vulnerable, each flagged library including a function reaching the vulnerable function, wherein the flagging of one or more of the identified third party libraries as vulnerable comprises associating one or more of the identified third party libraries with the software vulnerability; and
      flag one or more first party libraries as vulnerable, the flagged one or more first party libraries matching one or more of the flagged third party libraries.
Clause 9: The computerized system of clause 8, wherein one or more of the processors are configured to:
   for each of the identified one or more third party libraries:
   build a reachability graph, the reachability graph including one or more functions of the identified third party library; and
   extract one or more of the functions from the reachability graph, wherein each of the extracted functions reach the vulnerable function;
   wherein the flagging of the one or more of the identified third party libraries is performed based on the extracting of the one or more of the functions from the reachability graph.
Clause 10: The computerized system of clause 8, wherein the flagging of one or more of the identified third party libraries as vulnerable comprises storing a database entry in cache memory, the database entry associating the one or more flagged third party libraries and the one or more functions reaching the vulnerable function with the software vulnerability.
Clause 11: The computerized system of clause 9, wherein one or more of the processors are configured to filter out one or more of the extracted functions, the filtered out functions called from outside of the identified library.
Clause 12: The computerized system of clause 8, wherein one or more of the processors are configured to iteratively repeat, for one or more of the third party libraries flagged as vulnerable, the identifying of one or more third party libraries using the vulnerable library and the flagging of one or more of the identified third party libraries as vulnerable.
Clause 13: The computerized system of clause 8, wherein the function reaching the vulnerable function comprises one or more of: a function passing one or more data items into the vulnerable function, a function including a call chain wherein the call chain includes the vulnerable function, and a function included in a software module wherein the software module includes the vulnerable function.
Clause 14: The computerized system of clause 8, wherein one or more of the processors are configured to display an alert on a graphical user interface (GUI) of a computer system, the alert describing the flagged one or more first party libraries.
Clause 15: A computerized method of software security analysis, the method comprising, using a computer processor:
   for each of a plurality of threats, each threat associated with a vulnerable function, the vulnerable function included in a vulnerable library:
      determining one or more third party libraries using the vulnerable library;
      labeling one or more of the determined third party libraries as vulnerable, each labeled library including a function connected to the vulnerable function, wherein the labeling of one or more of the determined third party libraries as vulnerable comprises linking one or more of the determined third party libraries with the threat; and
   labeling, using one or more of the labeled third party libraries, one or more first party libraries as vulnerable.
Clause 16: The computerized method of clause 15, comprising, for each of the determined one or more third party libraries:
   building a reachability graph, the reachability graph including one or more functions of the determined third party library; and
   obtaining one or more of the functions from the reachability graph, wherein each of the obtained functions are connected to the vulnerable function;
   wherein the labeling of the one or more of the determined third party libraries is performed based on the obtaining of the one or more of the functions from the reachability graph.
Clause 17: The computerized method of clause 15, wherein the labeling of one or more of the determined third party libraries as vulnerable comprises creating a database entry in cache memory, the database entry linking the one or more flagged third party libraries and the one or more functions connected to the vulnerable function with the threat.
Clause 18: The computerized method of clause 16, comprising discarding one or more of the obtained functions, the discarded functions called from outside of the determined library.
Clause 19: The computerized method of clause 15, comprising iteratively repeating, for one or more of the third party libraries labeled as vulnerable, the determining of one or more third party libraries using the vulnerable library and the labeling of one or more of the determined third party libraries as vulnerable.
Clause 20: The computerized method of clause 15, wherein the function connected to the vulnerable function comprises one or more of: a function providing one or more data items to the vulnerable function, a function including a call chain wherein the call chain includes the vulnerable function, and a function included in a software program wherein the software program includes the vulnerable function.

## Claims

1. A computerized method of contextual security analysis for software artifacts, the method comprising, using a computer processor:
for each of a plurality of software vulnerabilities, each software vulnerability associated with a vulnerable function, the vulnerable function included in a vulnerable library:
identifying one or more third party libraries using the vulnerable library;
flagging one or more of the identified third party libraries as vulnerable, each flagged library including a function reaching the vulnerable function, wherein the flagging of one or more of the identified third party libraries as vulnerable comprises associating one or more of the identified third party libraries with the software vulnerability; and
flagging one or more first party libraries as vulnerable, the flagged one or more first party libraries matching one or more of the flagged third party libraries.

2. The computerized method of claim 1, comprising, for each of the identified one or more third party libraries:
building a reachability graph, the reachability graph including one or more functions of the identified third party library; and
extracting one or more of the functions from the reachability graph, wherein each of the extracted functions reach the vulnerable function;
wherein the flagging of the one or more of the identified third party libraries is performed based on the extracting of the one or more of the functions from the reachability graph.

3. The computerized method of claim 1 or claim 2, wherein the flagging of one or more of the identified third party libraries as vulnerable comprises storing a database entry in cache memory, the database entry associating the one or more flagged third party libraries and the one or more functions reaching the vulnerable function with the software vulnerability.

4. The computerized method of claim 2, comprising filtering out one or more of the extracted functions, the filtered out functions called from outside of the identified library.

5. The computerized method of any of claims 1-4, comprising iteratively repeating, for one or more of the third party libraries flagged as vulnerable, the identifying of one or more third party libraries using the vulnerable library and the flagging of one or more of the identified third party libraries as vulnerable.

6. The computerized method of any of claims 1-5, wherein the function reaching the vulnerable function comprises one or more of: a function passing one or more data items into the vulnerable function, a function including a call chain wherein the call chain includes the vulnerable function, and a function included in a software module wherein the software module includes the vulnerable function.

7. The computerized method of any of claims 1-6, comprising displaying an alert on a graphical user interface (GUI) of a computer system, the alert describing the flagged one or more first party libraries.

8. A computerized system for contextual security analysis of software artifacts, the system comprising:
a memory: and
one or more processors configured to:
for each of a plurality of software vulnerabilities, each software vulnerability associated with a vulnerable function, the vulnerable function included in a vulnerable library:
identify one or more third party libraries using the vulnerable library;
flag one or more of the identified third party libraries as vulnerable, each flagged library including a function reaching the vulnerable function, wherein the flagging of one or more of the identified third party libraries as vulnerable comprises associating one or more of the identified third party libraries with the software vulnerability; and
flag one or more first party libraries as vulnerable, the flagged one or more first party libraries matching one or more of the flagged third party libraries.

9. The computerized system of claim 8, wherein one or more of the processors are configured to:
for each of the identified one or more third party libraries:
build a reachability graph, the reachability graph including one or more functions of the identified third party library; and
extract one or more of the functions from the reachability graph, wherein each of the extracted functions reach the vulnerable function;
wherein the flagging of the one or more of the identified third party libraries is performed based on the extracting of the one or more of the functions from the reachability graph.

10. The computerized system of claim 8 or claim 9, wherein the flagging of one or more of the identified third party libraries as vulnerable comprises storing a database entry in cache memory, the database entry associating the one or more flagged third party libraries and the one or more functions reaching the vulnerable function with the software vulnerability.

11. The computerized system of claim 9, wherein one or more of the processors are configured to filter out one or more of the extracted functions, the filtered out functions called from outside of the identified library.

12. The computerized system of any of claims 8-11, wherein one or more of the processors are configured to iteratively repeat, for one or more of the third party libraries flagged as vulnerable, the identifying of one or more third party libraries using the vulnerable library and the flagging of one or more of the identified third party libraries as vulnerable.

13. The computerized system of any of claims 8-12, wherein the function reaching the vulnerable function comprises one or more of: a function passing one or more data items into the vulnerable function, a function including a call chain wherein the call chain includes the vulnerable function, and a function included in a software module wherein the software module includes the vulnerable function.

14. The computerized system of any of claims 8-13, wherein one or more of the processors are configured to display an alert on a graphical user interface (GUI) of a computer system, the alert describing the flagged one or more first party libraries.
